# EUROPÄISCHE PATENTANMELDUNG

(11) **EP 4 219 357 A1**
(43) Veröffentlichungstag der Anmeldung: **02.08.2023**
(21) Anmeldenummer: 23166303.0
(22) Anmeldetag: 25.04.2018
(51) Int. Cl.: B65G 47/61, B65G 17/20

(54) **VORRICHTUNG ZUM BESCHICKEN VON TRANSPORTTASCHEN**

(30) Priorität: 05.05.2017 CH 6072017; 15.12.2017 CH 15432017
(62) Teilanmeldung aus: 18720584.4
(71) Anmelder: FERAG AG, 8340 Hinwil (CH)
(72) Erfinder: RAMSEIER, Marcel, 8623 Wetzikon (CH)
(74) Vertreter: Frei Patent Attorneys

(57) **Zusammenfassung**

Die Erfindung betrifft eine Hängefördereinrichtung (20), enthaltend eine Führungsschiene (41) und mindestens eine Transporttasche (21) für den hängenden Transport eines Transportgutes (2) entlang eines Förderweges, wobei die mindestens eine Transporttasche (21) über eine Verbindungsstruktur (70.1, 70.2) mit einem entlang der Führungsschiene (41) bewegbaren Förderorgan (40) verbunden ist. Die Verbindungsstruktur (70.1, 70.2) enthält einen Schwenkkörper (71.1, 71.2) und einen Verbindungskörper (72), wobei die Transporttasche (21) am Schwenkkörper (71.1, 71.2) befestigt ist, und der Verbindungskörper (72) mit dem Förderorgan (40) verbunden ist, und wobei der Schwenkkörper (71.1, 71.2) über eine Schwenkverbindung mit dem Verbindungskörper (72) verbunden ist, derart dass der Schwenkkörper (71.1, 71.2) gegenüber dem Verbindungskörper (72) quer zur Förderrichtung (F) geführt schwenkbar ist.

## Beschreibung

Die Erfindung liegt auf dem Gebiet der Transport- und Fördertechnik, insbesondere der Intra-Logistik.

Gemäss einem ersten Aspekt betrifft die Erfindung eine Vorrichtung zum Beschicken einer hängenden Transporttasche von oben mit einem Transportgut, insbesondere mit einem Stückgut. Die Vorrichtung enthält eine Zufördereinrichtung zum Zufördern des Transportguts in einen Transferbereich einer Hängefördereinrichtung. Die Hängefördereinrichtung enthält ferner eine Führungsschiene und entlang der Führungsschiene bewegbare Transporttaschen.

Die Begriffe "oben", "oberhalb" sowie "unten", "unterhalb" beziehen sich auf die Schwerkraftrichtung.

Die Begriffe "nach oben", "von oben" bzw. "nach unten", "von unten" im Zusammenhang mit einer Bewegung bedeutet, dass eine Bewegungskomponente in bzw. entgegen der Schwerkraft vorhanden ist.

Ferner betrifft die Erfindung gemäss dem ersten Aspekt auch ein Verfahren zum Beschicken einer Transporttaschen mit einem Transportgut, mittels der erfindungsgemässen Vorrichtung, wobei die Transporttasche in Förderrichtung in hängender Position in den Transferbereich gefördert wird, und das Transportgut mittels der Zufördereinrichtung in Zuförderrichtung dem Transferbereich zugefördert und in einer Transferrichtung von oben durch die Aufnahmeöffnung in das Aufnahmefach der Transporttasche transferiert wird.

In automatisierten Warenlagern, weitläufigen Produktionsstätten und beim Warentransport ganz allgemein besteht der Bedarf, Transportgüter in geeignete Behältnisse aufzunehmen, diese dann zum Beispiel über eine Hängefördereinrichtung weiter zu fördern und Zwischenzuspeichern oder zu ihrem Bestimmungsort zu transportieren und dort wieder zu entladen.

Hängefördereinrichtungen werden insbesondere auch bei der Sortierung und Kommissionierung von Artikeln eingesetzt. Die Kommissionierung ist das Zusammenstellen jeweils einer Auswahl von Artikeln aus einer Gesamtheit (Sortiment von Artikeln). Die Kommissionierung kann zum Beispiel auf einem Kundenauftrag oder einem Produktionsauftrag basieren.

So ist es aus dem Stand der Technik bekannt, für den Transport von Artikeln bzw. Gütern Hängefördereinrichtungen mit Transporttaschen einzusetzen.

Die Publikationsschrift DE 10 2004 018 569 A1 beschreibt beispielsweise eine Hängefördereinrichtung mit einer Mehrzahl von zusammenklappbaren Sammeltaschen zum Aufnehmen und sortierenden Sammeln von Objekten, insbesondere von Kleidungsstücken. Die Sammeltasche umfasst ein Rahmengestell und einen am Rahmengestell hängenden Taschenbeutel. Die Sammeltasche ist über einen am Rahmengestell angebrachten Haken an der Hängefördereinrichtung aufgehängt.

Der Vorteil von Transporttaschen liegt darin, dass diese flexibel ausgebildet sind. Dadurch lässt sich das Aufnahmefach komprimieren bzw. zusammendrücken, z. B. durch Zusammenfalten. Die Transporttaschen erlauben auf diese Weise gegenüber beispielsweise starren Kisten und Behältern eine platzsparende Güterlogistik. So lassen sich leere Transporttaschen mit zusammengedrücktem Aufnahmefach platzsparend lagern oder fördern. Die Aufnahmefächer brauchen erst für den Gütertransport oder die Güterlagerung raumeinnehmend expandiert zu werden.

Hängefördereinrichtungen benötigen wie andere Fördereinrichtungen entsprechend Platz. Dieser steht jedoch oftmals nur beschränkt zur Verfügung. So können insbesondere im Transferbereich, in welchem ein Transportgut in Transporttaschen der Hängefördereinrichtung transferiert wird, Platzprobleme auftreten. Dies liegt unter anderem daran, weil die Hängefördereinrichtung die zur Verfügung stehenden Fläche mit einer Zufördereinrichtung teilen muss, welche das Transportgut in den Transferbereich fördert.

Die Publikationsschrift DE 10 2008 061 685 A1 beschreibt eine Anlage mit einer Beladestation für Transporttaschen, welche mittels einer Hängefördereinrichtung gefördert werden. Die Beladestation weist eine obere Zuführschiene für die Transporttaschen, einen an die obere Zuführschiene anschliessenden Senkrecht-Förderer zum Zuführen der Transporttaschen in eine untere Belade-Position, eine Einrichtung zum Öffnen der Transporttaschen in der Belade-Position und eine an den Senkrecht-Förderer anschliessende untere Wegführschiene zum horizontalen Wegfördern der Transporttaschen aus der Belade-Position auf. Da das Transportgut sowohl horizontal zugefördert als auch in den Transporttaschen horizontal weggefördert wird, benötigt die Anlage vergleichsweise viel Fläche.

Es ist nun Aufgabe der vorliegenden Erfindung gemäss dem ersten Aspekt, eine Vorrichtung zum Beschicken von Transporttaschen mit einem Transportgut vorzuschlagen, welche möglichst wenig Fläche beansprucht.

Die Aufgabe wird durch die Merkmale der unabhängigen Ansprüche 1 und 10 gelöst. Die abhängigen Ansprüche, die Beschreibung und die Figuren beinhalten besondere Ausführungsformen und Weiterbildungen der Erfindung.

Die erfindungsgemässe Vorrichtung zeichnet sich dadurch aus, dass der Verlauf der Führungsschiene so ausgelegt ist, dass die Transporttasche nach dem Transfer des Transportgutes in die Transporttasche, gegebenenfalls nach Passieren einer im Transferbereich angeordneten Taschenauflage, hängend, insbesondere frei hängend, aus dem Transferbereich nach oben weggefördert wird.

Wegfördern aus dem Transferbereich bedeutet einen Fördervorgang unmittelbar nach dem Transferbereich.

"Hängend" bedeutet, dass die Transporttasche in Ruhelage vertikal ausgerichtet ist oder gegenüber einer Vertikalen eine Neigung aufweist, welche 45° oder weniger, insbesondere 35° oder weniger und ganz besonders 30° oder weniger beträgt. Die Neigung kann durch ein Auslenkelement, wie z. B. Taschenauflage, erzwungen sein.

"Frei hängend" bedeutet insbesondere, dass die Transporttasche in Ruhelage vertikal ausgerichtet ist und insbesondere nicht durch ein Auslenkelement zwangsweise in eine Neigung ausgelenkt wird.

Die Bewegung der Transporttasche nach oben unmittelbar nach dem Transferbereich bedeutet insbesondere, dass die vertikale Bewegungskomponente mindestens gleich ist wie oder grösser ist als die horizontale Bewegungskomponente, falls letztere überhaupt vorhanden ist.

Der Transferbereich entspricht jenem Bereich der Vorrichtung, in welchem die Transportgüter von der Zufördereinrichtung an die Transporttaschen der Hängefördereinrichtung transferiert, d.h. abgeben bzw. übergeben werden.

Die Zufördereinrichtung und die Hängefördereinrichtung sind insbesondere derart ausgebildet und relativ zueinander angeordnet, dass die Transporttasche hängend, insbesondere frei hängend in den Transferbereich bewegt wird.

Die Transporttasche bildet in Offenstellung insbesondere ein über eine Aufnahmeöffnung von oben zugängliches Aufnahmefach für das Transportgut aus.

Das Aufnahmefach ist während des Transfers des Transportgutes, d.h. im Transferbereich, entsprechend in einer Offenstellung.

Die Vorrichtung umfasst daher insbesondere einen Öffnungsmechanismus, mittels welchem die Transporttasche zu oben genanntem Zwecke geöffnet werden kann. Der Öffnungsmechanismus kann so ausgelegt sein, dass die Transporttasche in Förderrichtung bereits vor dem Transferbereich geöffnet wird. Der Öffnungsmechanismus kann auch so ausgelegt sein, dass die Transporttasche erst im Transferbereich geöffnet wird.

Ganz allgemein enthält die Vorrichtung insbesondere einen Öffnungsmechanismus, mittels welchem die Transporttasche vor oder im Transferbereich geöffnet werden kann.

Der Öffnungsmechanismus kann eine Steuerkulisse umfassen, welche auf eine an der Transporttasche angeordnete Steuerrolle einwirkt und so das Öffnen der Tasche bewirkt. Die Steuerkulisse kann stationär sein, wobei die Steuerrolle während der Förderung der Transporttasche in den Transferbereich über die stationäre Steuerkulisse geführt wird.

Die Transporttasche kann im Weiteren Öffnungsmittel umfassen, über welche das Aufnahmefach, insbesondere entgegen der Schwerkraft oder entgegen einer Rückstellkraft, in die Offenstellung bewegt bzw. in dieser gehalten werden kann. Solche Öffnungsmittel können die oben erwähnte Steuerrolle umfassen. Ferner können die Öffnungsmittel auch Gleitelemente, Zapfen, Drahtbögen oder Drahtösen umfassen.

Die Transporttasche umfasst insbesondere eine, die Rückseite des Aufnahmefachs ausbildende Taschenrückwand.

Die Taschenrückwand ist insbesondere selbsttragend bzw. eigenstabil ausgebildet. Die Taschenrückwand ist insbesondere steif ausgebildet. Die Taschenrückwand ist insbesondere plan bzw. eben ausgebildet.

Gemäss einer Weiterbildung bildet die Taschenrückwand in der Offenstellung der Transporttasche einen über das Aufnahmefach hinaus verlängerten Rückwandabschnitt aus.

Die Transporttasche umfasst ferner insbesondere eine, die Vorderseite des Aufnahmefachs ausbildende Taschenvorderwand. Die Taschenvorderwand ist insbesondere selbsttragend bzw. eigenstabil ausgebildet. Die Taschenrückwand ist insbesondere steif ausgebildet Die Taschenvorderwand ist insbesondere plan bzw. eben ausgebildet.

Die Taschenvorderwand kann über Taschenseitenwände und einem Taschenboden mit der Taschenrückwand verbunden sein. Diese bilden in Offenstellung auch das Aufnahmefach aus.

Die Taschenvorderwand und die Taschenrückwand sind zum Öffnen und Schliessen der Transporttasche insbesondere relativ zueinander bewegbar.

Beim Öffnen wird die Transporttasche insbesondere von einer Schliessstellung, in welcher die Taschenvorderwand in Kompaktlage zur Taschenrückwand hin angeordnet ist, in eine Offenstellung, in welcher das Aufnahmefach unter Ausbildung der Aufnahmeöffnung expandiert ist, überführt. Die Taschenvorderwand ist in der Offenstellung von der Taschenrückwand beabstandet.

Die Taschenrückwand und/oder die Taschenvorderwand und insbesondere die gesamte Transporttasche kann beispielsweise einen Rahmen umfassen. Der Rahmen kann zur Ausbildung der Wände mit einem Flächengebilde, insbesondere einem textilen Flächengebilde, wie Gewebe, bespannt sein.

Der Rahmen ist insbesondere starr. Der Rahmen kann aus Draht oder einem Gestänge, sein.

Gemäss einer Weiterbildung der Erfindung liegen die Transferrichtung des Transportgutes in die Transporttasche und die Förderrichtung bzw. -bahn der Transporttasche aus dem Transferbereich heraus in einer gemeinsamen Ebene.

Gemäss einer Weiterbildung der Erfindung liegen die Transferrichtung des Transportgutes in die Transporttasche und die Förderrichtung bzw. -bahn der Transporttasche in den Transferbereich hinein in einer gemeinsamen Ebene.

Unter Transferrichtung ist jene Richtung zu verstehen, in welche sich das Transportgut beim Transfer von der Zufördereinrichtung in die Transporttasche bewegt.

Die Transporttaschen sind insbesondere mit einem entlang der Führungsschiene bewegbaren Förderorgan verbunden.

Die Führungsschiene verläuft zum Transferbereich hin insbesondere im Wesentlichen horizontal und ganz besonders horizontal. Im Wesentlichen horizontal beinhaltet auch Neigungen der Führungsschiene, welche 10° (Winkelgrad) oder weniger, insbesondere 5° oder weniger von der Horizontalen abweichen.

Ganz allgemein verläuft die Führungsschiene zum Transferbereich hin insbesondere geneigt, so dass die Transporttasche schwerkraftunterstützt und insbesondere ohne Antrieb in den Transferbereich bewegbar ist.

Die Führungsschiene bildet im Transferbereich insbesondere eine Biegungsabschnitt aus. Im Biegungsabschnitt werden die Transporttaschen entlang einer Kurvenbahn von einer Zuförderrichtung in eine Wegförderrichtung umgelenkt.

Die Transporttaschen werden im Biegungsabschnitt insbesondere von einer horizontalen oder im Wesentlichen horizontalen Bewegungs- bzw. Zuförderrichtung in eine nach oben gerichtet, insbesondere schräg nach oben gerichtete Bewegungs- bzw. Wegförderrichtung umgelenkt.

Gemäss einer Ausführung der Erfindung bildet die Führungsschiene unmittelbar nach dem Biegungsabschnitt im Transferbereich einen insbesondere geneigten Wegförderabschnitt aus. Die Führungsschiene weist im Wegförderabschnitt gegenüber einer Horizontalen insbesondere einen Winkel von 45° oder mehr, ganz besonders von 60° oder mehr aus. Der Winkel kann ferner 90° oder weniger als 90° betragen.

Das heisst die Transporttaschen werden im genannten Winkel aus dem Transferbereich nach oben weggefördert.

Die Hängefördereinrichtung ist zum hängenden, insbesondere mindestens abschnittsweise frei hängenden Fördern der Transporttaschen ausgelegt. Die Hängefördereinrichtung umfasst insbesondere mehrere in Förderrichtung entlang einer Führungsschiene hintereinander bewegbare Transporttaschen.

Die Hängefördereinrichtung ist insbesondere zum einzelnen Fördern der Transporttaschen ausgelegt. Der Begriff "einzeln" bedeutet, dass die Transporttaschen bzw. deren Förderorgane nicht direkt miteinander verbunden, z. B. verkettet, sind.

Die Hängefördereinrichtung kann in Förderrichtung betrachtet vor dem Transferbereich einen Vereinzelungsmechanismus enthalten, mittels welchem die z. B. in einem Stauraum bzw. entlang einer Staustrecke vor dem Vereinzelungsmechanismus zurückgehaltenen Transporttaschen einzeln in den Transferbereich entlassen bzw. gefördert werden können.

Der Vereinzelungsmechanismus kann ein Freigabeorgan umfassen, welches die Transporttasche freigibt. Das Freigabeorgan kann einen bewegbaren Anschlag ausbilden, an welchem die Transporttaschen zurückgehalten werden. Zur Freigabe einer Transporttasche kann der Anschlag in eine entsprechende Freigabeposition bewegt werden. Das Freigabeorgan bzw. dessen Anschlag wird insbesondere über eine Steuerung gesteuert.

Der Vereinzelungsmechanismus kann eine Förderschnecke beinhalten, mittels welcher die einzelnen Transporttaschen zum Transferbereich hin gefördert werden.

Die Förderschnecke ist um eine parallel zur Förderrichtung angeordneten Drehachse drehbar gelagert.

Entlang des Aussenumfanges der Förderschnecke ist eine wendel- bzw. schraubenlinienförmig ausgebildete Führungsnut angeordnet. Die Führungsnut dient der Aufnahme eines am Förderorgan angeordneten Mitnahmeelementes, wie Mitnahmenockens. Dieser greift in die Führungsnut ein und wird zusammen mit dem Förderorgan und der an diesem hängenden Transporttasche durch die sich mit der Förderschnecke drehenden Führungsnut entlang der Drehachse der Förderschnecke mitgenommen.

In Förderrichtung betrachtet vor dem Vereinzelungsmechanismus kann eine Staustrecke ausgebildet werden, in welcher die sich aufstauenden Transporttaschen zurückgehalten werden.

Die Hängefördereinrichtung kann ferner einen Mitnahmeförderer mit mindestens einem und insbesondere mehreren Mitnehmern zum Mitnehmen des Förderorgans und somit der mit diesem verbunden Transporttasche in Förderrichtung enthalten. Der mindestens eine Mitnehmer kann an einem, insbesondere umlaufenden Mitnehmerelement, wie Mitnehmerkette angeordnet sein. So können mehrere Mitnehmer hintereinander und voneinander beabstandet entlang des Mitnahmeelementes angeordnet sein. Der mindestens eine Mitnehmer kann ein Mitnehmernocken sein.

Ganz allgemein wird die Transporttasche insbesondere mittels eines Mitnahmeförderers aktiv in den und/oder im Transferbereich gefördert.

Der Mitnahmeförderer ist insbesondere in Förderrichtung nach dem Vereinzelungsmechanismus und insbesondere nach der Förderschnecke angeordnet. Der Vereinzelungsmechanismus bzw. die Förderschnecke übergibt die Transporttaschen insbesondere an den Mitnahmeförderer.

Das Förderorgan kann ein Kontaktelement zur Ausbildung eines Mitnahmekontaktes mit dem Mitnehmer des Mitnahmeförderers enthalten.

Der Mitnahmeförderer wird durch einen Antrieb aktiv angetrieben.

Der Mitnahmeförderer dient insbesondere der aktiven Förderung der Transporttaschen nach dem Transferbereich entgegen der Schwerkraft entlang der Führungsschiene nach oben. Der Mitnahmeförderer entspricht daher insbesondere einem Aufwärtsförderer.

Der Mitnahmeförderer kann auch der aktiven Förderung der Transporttaschen entlang der Führungsschiene in den Transferbereich hinein dienen. Die Förderung durch den Mitnahmeförderer erfolgt in Förderrichtung betrachtet insbesondere nach der Vereinzelungseinrichtung, insbesondere nach der Förderschnecke.

Der Mitnahmeförderer kann auch der aktiven Förderung der Transporttaschen entlang der Führungsschiene im Transferbereich dienen.

Die Zufördereinrichtung bildet insbesondere eine Förderfläche aus, welcher das Transportgut aufliegt. Die Förderfläche kann durchgehend oder unterbrochen sein.

Die Zuförderrichtung bzw. die Förderfläche verläuft insbesondere horizontal oder im wesentlichen horizontal. Im wesentlichen horizontal bedeutet, dass die Zuförderrichtung 10° oder weniger, insbesondere 5° oder weniger von einer Horizontalen abweicht.

Die Zufördereinrichtung enthält insbesondere mindestens eine Fördereinheit, welche eine Förderfläche ausbildet. Die Förderfläche wird insbesondere durch ein umlaufendes Förderorgan ausgebildet. Das Förderorgan kann angetrieben sein.

Ganz allgemein umfasst die Zufördereinrichtung mindestens eine Fördereinheit, welche eine Förderfläche ausbildet, und die mindestens eine Fördereinheit ein antreibbares, insbesondere umlaufendes, Förderorgan umfasst.

Das Förderorgan kann flächig sein. Das Förderorgan kann ein Förderband, eine Mattenkette oder eine Rollenbahn sein.

Die Zufördereinrichtung ist insbesondere dazu ausgelegt, das Transportgut vereinzelt bzw. portioniert dem Transferbereich zuzuführen. Das Transportgut wird hierbei jeweils vereinzelt bzw. portioniert von der Zufördereinrichtung in die einzelnen Transporttaschen transferiert. Das Transportgut kann hierzu vereinzelt bzw. portioniert in Abteilen oder Fächern der Zufördereinrichtung dem Transferbereich zugefördert werden.

Das Transportgut kann ein (portioniertes) Schüttgut, wie Pulver, Granulat, Kleinteile (z. B. Schrauben), etc. sein. Das Transportgut umfasst jedoch insbesondere Stückgüter, d.h. einzelne diskrete Gegenstände. Diese Gegenstände können Haushaltsartikel, Sportartikel, Kleider, Schuhe, verpackte Artikel, gefüllte Beutel (Versandbeutel) oder Gebinde, wie Kartons oder Schachteln, sein. Entsprechend können die Transporttaschen mit einzelnen Stückgütern beschickt werden.

Der Transferbereich kann am Kopfende einer Umlenkstelle des Förderorgans der Zufördereinrichtung angeordnet sein. An der Umlenkstelle wird das Förderorgan insbesondere nach unten umgelenkt.

Gemäss einer Weiterbildung der Erfindung enthält die Zufördereinrichtung mehrere in Zuförderrichtung hintereinander angeordnete Fördereinheiten, welche jeweils eine Förderfläche ausbilden. Die Fördereinheiten umfassen jeweils insbesondere ein umlaufendes Förderorgan. Die Förderorgane können individuell angetrieben sein.

Gemäss einer Weiterbildung der Erfindung kann sich der Förderweg des durch die Zufördereinrichtung zugeförderten Transportguts mit dem Förderweg des in den Transporttaschen weggeförderten Transportguts überschneiden.

In einem solchen Fall kann die Zufördereinrichtung zur Freigabe des Förderweges der aus dem Transferbereich wegzufördernden Transporttasche ein aus einer Zuförderposition weg bewegbaren Förderabschnitt enthalten. Die Zuförderposition entspricht jener Position, welche der besagte Förderabschnitt während des Transfers eines Transportgutes in die Transporttasche einnimmt.

Ganz allgemein kann die Zufördereinrichtung zur Freigabe des Förderweges der aus dem Transferbereich wegzufördernden Transporttasche ein aus einer Förderposition weg bewegbaren Förderabschnitt enthalten.

Der besagte Förderabschnitt kann insbesondere aus der Transferposition wegschwenkbar sein. Der besagte Förderabschnitt kann durch eine Fördereinheit ausgebildet werden.

Die Zufördereinrichtung enthält insbesondere eine zum Transferbereich hin abschliessende Fördereinheit, welche zur Freigabe des Förderweges der aus dem Transferbereich wegzufördernden Transporttasche aus einer Transferposition weg bewegbar, insbesondere wegschwenkbar ist.

Die abschliessende Fördereinheit kann ein umlaufende Förderorgan umfassen, wie oben bereits beschrieben. Die abschliessende Fördereinheit kann auch eine Rollenbahn umfassen, über welchen das Transportgut in die Transporttaschen transferiert wird.

Die Transporttasche ist mit ihrem vorlaufenden Aufnahmefach im Transferbereich in Förderrichtung der Transporttasche betrachtet insbesondere frontal vor der Zufördereinrichtung angeordnet.

Die Vorrichtung bzw. die Zufördereinrichtung kann eine Taschenauflage ausbilden, an welcher die Transporttasche im Transferbereich, insbesondere mit der Taschenvorderwand, an- oder aufliegt. Die Transporttasche liegt der Taschenauflage insbesondere flächig an bzw. auf.

Die Auflagefläche der Taschenauflage kann mit einer horizontalen einen Winkel von 45° oder mehr, insbesondere von 60° oder mehr ausbilden. Der Winkel ist ferner insbesondere kleiner 90°.

Dadurch kann die Transporttasche im Transferbereich im Hinblick auf den Transfer des Transportgutes stabilisiert werden. Ein allfälliges Schwingen der Transporttasche wird dadurch im Transferbereich gestoppt.

Zudem kann die Auflagefläche bereits die Neigung der beschickten Transporttasche abnehmen, welche diese aufgrund des vor dem Aufhängepunkt liegenden Schwerpunkts in frei hängender Position ohnehin einnimmt. Dadurch kann ein Schwingen der Transporttaschen nach dem Transferbereich verhindert oder zumindest reduziert werden.

Die Taschenauflage kann auch dazu ausgelegt sein, dass die Transporttasche beim Wegfördern aus dem Transferbereich nach dem Transfer des Transportgutes auf der Taschenauflage nach oben abrollt oder nach oben gleitet.

Die Taschenauflage bildet entsprechend insbesondere eine Auflagefläche aus. Die Auflagefläche kann unmittelbar an die Förderfläche der Zufördereinrichtung anschliessen.

Die Taschenauflage kann auch einem Endabschnitt einer Förderfläche der Zufördereinrichtung entsprechen bzw. Teil einer abschliessenden Fördereinheit sein.

Die Taschenauflage kann eine Rollenbahn ausbilden. Dies hat den Vorteil, dass die aus dem Transferbereich T heraus bewegte Transporttasche mit ihrer Taschenvorderwand insbesondere entgegen der Transferrichtung auf der Rollenbahn abrollen kann.

Wird die Taschenauflage aus einem Endabschnitt einer Förderfläche bzw. einer abschliessenden Fördereinheit ausgebildet, so kann die Rollenbahn auch dazu ausgelegt sein, dass das in die Transporttasche zu transferierende Transportgut in Transferrichtung über die Rollenbahn abrollt.

Die Taschenauflage kann gegenüber einer vertikalen eine Neigung aufweisen. Die Taschenauflage kann auch vertikal ausgerichtet sein.

Die Erfindung betrifft im Weiteren auch ein Verfahren zum Beschicken einer Transporttasche mit einem Transportgut. Das Verfahren wird insbesondere mittels einer oben beschriebenen Vorrichtung betrieben.

Die Transporttasche wird gemäss Verfahren in Förderrichtung hängend, insbesondere frei hängend, in den Transferbereich bewegt bzw. tritt in diesen ein.

Die Transporttasche wird über das Förderorgan entlang der Führungsschiene in den Transferbereich gefördert.

Die Transporttasche wird insbesondere im Wesentlichen horizontal oder horizontal in den Transferbereich gefördert. Im Wesentlichen horizontal beinhaltet auch Neigungen, welche 10° oder weniger, insbesondere 5° oder weniger von der Horizontalen abweichen.

Die Transporttasche kann auch entlang eines Gefälles in den Transferbereich gefördert werden. Das Gefälle erlaubt insbesondere eine schwerkraftunterstützte Förderung. Die Transporttasche kann in diesem Fall sogar selbständig, d.h. ohne aktiven Antrieb in den Transferbereich gefördert werden.

Allerdings ist es auch möglich, dass die Transporttasche mittels eines Mitnahmeförderers aktiv in den Transferbereich gefördert wird.

Die Transporttaschen werden insbesondere einzeln in den Transferbereich gefördert. Hierzu können die Transporttaschen über den Vereinzelungsmechanismus einzeln in Förderrichtung zum Transferbereich hin entlassen werden.

Die Transporttasche wird insbesondere mit der Aufnahmeöffnung in Förderrichtung gegenüber der Taschenrückwand vorlaufend durch den Transferbereich bewegt.

Die Transporttasche wird mit der Aufnahmeöffnung in Förderrichtung gegenüber der Taschenrückwand vorlaufend in den und durch den Transferbereich bewegt.

Das heisst, die Transporttasche wird mit der Aufnahmeöffnung in Förderrichtung gegenüber der Taschenrückwand vorlaufend in den Transferbereich hinein und aus dem Transferbereich heraus bewegt.

Die Transporttasche wird insbesondere vor dem oder im Transferbereich geöffnet.

Das Öffnen der Transporttasche erfolgt aktiv über den erwähnten Öffnungsmechanismus.

Gemäss einer Weiterbildung des Verfahrens wird die Förderbewegung der Transporttasche im Transferbereich gestoppt. Das heisst, die Transporttasche wird zwecks Transfer des Transportgutes von der Zufördereinrichtung in das Aufnahmefach der Transporttasche angehalten. Dies geschieht insbesondere durch Anhalten des Mitnahmeförderers.

Die Transporttasche kann vor einem Biegungsabschnitt im Transferbereich angehalten werden. Die Transporttasche kann in einem Biegungsabschnitt im Transferbereich angehalten werden. Die Transporttasche kann nach einem Biegungsabschnitt im Transferbereich angehalten werden.

Entsprechend befindet sich die Transporttasche zwecks Übergabe des Transportgutes im Transferbereich in einer definierten Transferstellung entlang der Förderstrecke der Hängefördereinrichtung.

Das Transportgut wird mittels der Zufördereinriehtung in Zuförderrichtung dem Transferbereich zugefördert und in einer Transferrichtung von oben durch die Aufnahmeöffnung in das Aufnahmefach der Transporttasche transferiert. Entsprechend befindet sich die Taschenöffnung unterhalb der Förderfläche der Zufördereinrichtung.

Ganz allgemein wird das Transportgut insbesondere schwerkraftunterstützt in die Transporttasche transferiert.

Die Transferrichtung umfasst insbesondere eine Richtungskomponente in Schwerkraftrichtung. Entsprechend wird das Transportgut im Transferbereich von der Zufördereinrichtung schwerkraftunterstützt in Transferrichtung in die Transporttasche übergeben.

Der Transfer des Transportgutes kann mittels einer geführten Bewegung, zum Beispiel über eine geneigte Förderfläche erfolgen. Die Übergabe des Transportgutes kann auch mittels einer ungeführten Bewegung, wie z. B. eines freien Falles, erfolgen.

Die Transporttasche wird nach dem Transfer des Transportgutes in die Transporttasche hängend nach oben weggefördert.

Die Transporttasche wird insbesondere entlang der Führungsschiene über das Förderorgan aus dem Transferbereich weggefördert.

Gemäss einer Weiterbildung der Erfindung wird die Transporttasche unmittelbar nach dem Transferbereich über einen Förderstreckenabschnitt im Wesentlichen entgegen, insbesondere entgegen der Transferrichtung des Transportgutes in die Transporttasche aus dem Transferbereich herausbewegt.

Im Wesentlichen entgegen der Transferrichtung bedeutet, dass die beiden Richtungen einen Winkel von 15° oder weniger, insbesondere von 5° oder weniger einschliessen können.

Schneidet der Förderweg der aus dem Transferbereich weggeförderten Transporttasche den Förderweg des Transportgutes der Zufördereinrichtung, so wird zur Freigabe des Förderwegs der aus dem Transferbereich wegzu fördernden Transporttasche der betreffende Förderabschnitt der Zufördereinrichtung aus seiner Förderposition weg in eine Freigabeposition bewegt, insbesondere weggeschwenkt.

Ganz allgemein wird zur Freigabe des Förderwegs der aus dem Transferbereich wegzufördernden Transporttasche insbesondere ein Förderabschnitt der Zufördereinrichtung aus einer Transferposition weg bewegt.

Die erfindungsgemässe Vorrichtung weist den Vorteil auf, dass die Transporttaschen unmittelbar nach dem Transfer des Transportgutes nach oben und somit aus der Förderebene der Zufördereinrichtung weggefördert werden. Die Förderwege der Hängefördereinrichtung und Zufördereinrichtung verlaufen auf diese Weise platzsparend auf unterschiedlichen Ebenen. Dadurch benötigt die erfindungsgemässe Vorrichtung weniger Installationsfläche.

Ferner wird durch das Wegfördern der befüllten Transporttasche nach oben umgehend Platz für eine nachfolgende Transporttasche freigegeben. Dadurch lässt sich der Befüllvorgang beschleunigen.

Ein weiterer Erfindungsaspekt betrifft eine Hängefördereinrichtung, enthaltend eine Führungsschiene und mindestens einer Transporttasche für den hängenden Transport eines Transportgutes, insbesondere eines Stückgutes, entlang eines Förderweges, wobei die mindestens eine Transporttasche über eine Verbindungsstruktur mit einem entlang der Führungsschiene bewegbaren Förderorgan verbunden ist.

Transporttaschen weisen in der Regel Aufhängehaken auf, über welchen diese z. B. an einem rollengeführten Förderorgan befestigt sind. Dies trifft beispielsweise auch auf die beiden eingangs zitierten Veröffentlichungsschriften zu.

Durch die Aufhängung der Transporttaschen über einen Aufhängehaken ist diese gegenüber dem Förderorgan frei schwingend. Das heisst, die Transporttasche kann sowohl in bzw. entgegen der Förderrichtung als auch quer zur Förderrichtung, schwingen.

In der Regel versetzen Trägheitskräfte die Transporttaschen in Schwingung. Trägheitskräfte treten beispielsweise beim Beschleunigen oder Abbremsen der Transporttasche entlang der Transportstrecke auf. Ferner kann die Transporttasche auch bei Richtungswechseln in Schwingung versetzt werden.

Eine frei schwingende Aufhängung der Transporttasche hat durchaus Vorteile. So werden die oben genannten Kräfte durch das Schwingen in kinetische Bewegungsenergie umgesetzt. Bei einer starren Aufhängung der Taschen würden dahingegen Kräfte auf die Verbindung zwischen Transporttasche und Förderorgan sowie auch auf das schienengeführte Förderorgan einwirken. Die Folge davon wären, hohe Reibungskräfte zwischen Förderorgan und Führungsschiene und entsprechen hoher Verschleiss, sowie eine hohe Beanspruchung der Verbindung zwischen Transporttasche und Förderorgan.

Aufgabe vorliegender Erfindung gemäss dem zweiten Erfindungsaspekt ist es deshalb, eine Hängefördereinrichtung vorzuschlagen, bei welcher die Nachteile einer frei schwingenden Transporttasche nicht mehr auftreten oder zumindest begrenzt sind. Dennoch soll die Transporttasche nicht starr am Förderorgan aufgehängt sein und die oben genannten Vorteile einer frei schwingenden Transporttasche aufweisen.

Die Aufgabe wird mit den Merkmalen des unabhängigen Anspruchs 16 gelöst. Die abhängigen Ansprüche, die Beschreibung und die Figuren beinhalten besondere Ausführungsformen und Weiterbildungen der Erfindung.

Die Erfindung gemäss dem zweiten Aspekt zeichnet sich nun dadurch aus, dass die Verbindungsstruktur einen Schwenkkörper und einen Verbindungskörper enthält, wobei die Transporttasche am Schwenkkörper befestigt ist. Der Verbindungskörper ist dahingegen mit dem Förderorgan verbunden.

Der Schwenkkörper ist nun über eine Schwenkverbindung mit dem Verbindungskörper verbunden, derart dass der Schwenkkörper gegenüber dem Verbindungskörper quer zur Förderrichtung geführt schwenkbar ist. Entsprechend ist die am Schwenkkörper befestigte Transporttasche über den Schwenkkörper quer zur Förderrichtung schwenkbar.

Gemäss einer Weiterbildung der Erfindung enthält der Verbindungskörper Schwenkanschläge zur Begrenzung des Schwenkwinkels des Schwenkkörpers.

Der Schwenkkörper seinerseits kann Schwenkbegrenzungsflächen ausbilden. Die Schwenkbegrenzungsflächen werden zur Begrenzung des Schwenkwinkels des Schwenkkörpers bei Erreichen eines maximalen Schwenkwinkels an den Schwenkanschlägen in Anschlag gebracht. Das heisst, der Schwenkwinkel wird durch Anschlagen der Schwenkbegrenzungsflächen an den Schwenkanschlägen begrenzt.

Der maximale Schwenkwinkel kann 60° oder weniger, insbesondere 45° oder weniger, und ganz besonders 25° oder weniger betragen. Der Schwenkwinkel entspricht dabei Winkel der Schwenkbewegung zwischen einem in Förderrichtung linken und rechten Schwenkanschlag.

Die Schwenkanschläge können Dämpfungselemente, z. B. aus gummielastischem Kunststoff, Federelementen oder Gel, umfassen, welche das Anschlagen der Schwenkkörper an den Schwenkanschlägen dämpfen und kinetische Energie absorbieren.

Die Schwenkbegrenzungsflächen können Dämpfungselemente, z. B. aus gummielastischem Kunststoff, Federelementen oder Gel, umfassen, welche das Anschlagen der Schwenkkörper an den Schwenkanschlägen dämpfen und kinetische Energie absorbieren.

Der Verbindungskörper kann ein- oder mehrteilig sein. Der Verbindungskörper kann aus Metall, wie z. B. Stahl bestehen.

Gemäss einer Weiterbildung der Erfindung kann der Verbindungskörper eine Schwenkführung für eine geführte Schwenkbewegung des Schwenkkörpers quer zur Förderrichtung ausbilden. Die Schwenkführung soll insbesondere ein Schwenken des Schwenkkörpers in bzw. entgegen der Förderrichtung verhindern.

Die Schwenkführung umfasst insbesondere ein in Förderrichtung betrachtet vor dem Schwenkkörper angeordnetes erstes Führungselement sowie ein nach dem Schwenckörper angeordnetes zweites Führungselement. Die Führungselemente sind insbesondere Führungswände.

Der Schwenkkörper ist mindestens über einen Schwenkkörperabschnitt zwischen dem ersten und zweiten Führungselement angeordnet.

Gemäss einer Weiterbildung der Erfindung ist die Verbindungsstruktur derart ausgelegt, dass diese ein Drehen der Transporttasche um ihre Mittelängsachse verhindert. Dies kann unter anderem durch die vorgenannte Schwenkführung geschehen.

Der Schwenkkörper ist insbesondere über eine (physische) Schwenkachse mit dem Verbindungskörper verbunden. Die Verbindung ist insbesondere lösbar und kann zum Beispiel eine Schraubverbindung sein.

Die Schwenkachse bildet eine Schwenklagerung für den Schwenkkörper am Verbindungskörper aus.

Die Schwenkachse ist insbesondere parallel zur Förderrichtung ausgerichtet.

Die Schwenkachse ist insbesondere durch das oben genannte erste und zweite Führungselement sowie durch den zwischen den beiden Führungselementen angeordneten Schwenkkörperabschnitt geführt.

Gemäss einer besonderen Ausführungsform ist der Verbindungskörper U-förmig ausgebildet. Der U-förmige Verbindungskörper umfasst zwei seitliche Wände sowie eine Verbindungswand, welche die beiden seitlichen Wände miteinander verbindet.

Der Schwenkkörper ist mindestens mit einem Schwenkkörperabschnitt zwischen den seitlichen Wänden quer zur Förderrichtung schwenkbar gelagert.

Die beiden seitlichen Wände sind insbesondere Teil der oben genannte Schwenkführung und entsprechen den erwähnten Führungselementen bzw. Führungswänden.

Der Schwenkkörper ist mit mindestens einem Schwenkkörperabschnitt in einen durch die beiden seitlichen Wände und die Verbindungswand ausgebildeten Schwenkraum des U-förmigen Verbindungskörpers geführt.

Die Schwenkachse ist durch die seitlichen Wände des U-förmigen Verbindungskörpers sowie durch den zwischen den beiden seitlichen Wänden angeordneten Schwenkkörperabschnitt geführt.

Der Verbindungskörper ist insbesondere über die Verbindungswand mit dem Förderorgan verbunden. Die Verbindung kann lösbar sein und zum Beispiel eine Schraubverbindung umfassen.

Der Schwenkkörper kann ein- oder mehrteilig ausgebildet sein. Der Schwenkkörper besteht insbesondere aus Kunststoff oder Metall. Der Schwenkkörper kann ein Spritzgussteil sein.

Der Schwenkkörper bildet insbesondere eine Bügelaufnahme für einen Haltebügel bzw. für einen Haltebügelabschnitt eines Haltebügels der Transporttasche aus.

Die Länge der Bügelaufnahme, welche sich in Betriebsstellung quer zur Förderrichtung erstreckt, beträgt insbesondere eine Mehrfaches des grössten, parallel zur Förderrichtung gemessenen Durchmessers der Bügelaufnahme. Die Länge der Bügelaufnahme kann insbesondere mindestens ein Fünffaches des genannten Durchmessers der Bügelaufnahme betragen.

Die Transporttasche ist über den Haltebügel bzw. den Haltebügelabschnitt insbesondere in bzw. entgegen der Förderrichtung schwenkbar in der Bügelaufnahme gelagert. Der Haltebügel ist insbesondere aus Draht.

Der Haltebügel kann quer zur Förderrichtung starr, das heisst nicht schwenkbar in der Bügelaufnahme gelagert sein.

Der Haltebügel bzw. der Haltebügelabschnitt, welcher in der Bügelaufnahme gehalten wird, ist im Querschnitt insbesondere rundlich, wie oval oder kreisrund ausgebildet.

So kann der Schwenkkörper gemäss einer Ausführungsvariante eine zum Verbindungskörper hin offene, schlitzförmige Bügelaufnahme zur Lagerung des Haltebügels ausbilden. Der Schwenkkörper kann hierzu insbesondere U-förmig ausgebildet sein.

Der Haltebügel kann über Sicherungselemente, wie Spannstifte aus Federstahl, welche quer durch die schlitzförmige Bügelaufnahme geführt sind, gegen ein Verschieben in Richtung Förderorgan gesichert sein.

Der Schwenkkörper kann gemäss einer Ausführungsvariante zwei, insbesondere baugleiche Fügeelemente umfassen, welche unter Ausbildung einer Bügelaufnahme für den Haltebügel miteinander zum Schwenkkörper verbunden sind.

Die Bügelaufnahme kann derart ausgestaltet sein, dass der Schwenkkörper den Haltebügel mindestens abschnittsweise vollumfänglich umfasst. Das heisst, der Schwenkkörper ist mindestens abschnittsweise als Durchgangsöffnung ausgebildet.

Gemäss einer besonderen Ausführungsvariante der Bügelaufnahme umfasst der Schwenkkörper den Haltebügel über die gesamte Länge der Bügelaufnahme vollumfänglich. Das heisst, die Bügelaufnahme ist über ihre gesamte Länge als Durchgangsöffnung ausgebildet.

Der Schwenkkörper bzw. die Bügelaufnahme kann den Haltebügel insbesondere mindestens abschnittsweise oder über die gesamte Länge im Wesentlichen formschlüssig umfassen.

Ganz allgemein kann der Schwenkkörper zwei baugleiche Fügeelemente umfassen, welche unter Ausbildung einer Bügelaufnahme für den Haltebügel miteinander zum Schwenkkörper verbunden sind, wobei der Haltebügel mindestens abschnittsweise vollumfänglich vom Schwenkkörper umfasst ist.

Der Haltebügel kann in der Bügelaufnahme lediglich mit geringfügigem radialem Spiel gehaltert werden. Dies erlaubt eine unbehinderte Schwenkbewegung der Tasche in und entgegen der Förderrichtung.

Der Haltebügel kann ferner in der Bügelaufnahme lediglich mit geringfügigem seitlichem Spiel gehaltert werden. Dies erlaubt lediglich eine geringfügige seitliche Verschiebung des Haltebügels relativ zum Schwenkkörper.

Es kann auch vorgesehen sein, dass die Bügelaufnahme den Haltebügel nicht starr haltert.

Die Bügelaufnahme kann gemäss einer Ausführungsvariante der Bügelaufnahme einen V-förmigen Aufnahmeabschnitt aufweisen oder als V-förmige Aufnahme ausgebildet sein. Die geneigten Seitenflanken des V-förmigen Bügelabschnittes bzw. der V-förmigen Bügelaufnahme laufen in Betriebsstellung nach unten, d.h. in Schwerkraftrichtung, zusammen.

Die Bügelaufnahme kann oberhalb des V-förmigen Aufnahmeabschnittes einen weiteren, z. B. rechteckförmigen, Aufnahmeabschnitt ausbilden, welcher gemeinsam mit dem V-förmigen Aufnahmeabschnitt die Bügelaufnahme ausbildet.

Die Bügelaufnahme gemäss dieser Ausführungsvariante weist insbesondere eine Querschnittsfläche auf, welche ein Mehrfaches der Querschnittsfläche des aufzunehmenden Bügels beträgt.

Der V-förmige Aufnahmeabschnitt, bzw. die V-förmige Aufnahme erlaubt eine Ausweichbewegung des Haltebügels aus einer definierten Förderlage im Bereich der zusammentreffenden geneigten Flanken bei besonderer äusserer Krafteinwirkung, wie sie beispielsweise bei Kurvenfahrten in Form von Zentripetalkräften auftritt. So erlaubt der V-förmige Aufnahmeabschnitt bzw. die V-förmige Aufnahme ein Ausweichen des Haltebügels entlang seiner geneigten, seitlichen Flanken aus seiner definierten Förderlage.

Sobald eine besondere äussere Krafteinwirkung wieder nachlässt, sorgt die V-förmige Ausgestaltung der Bügelaufnahme bzw. eines Abschnittes davon, dass der Haltebügel wieder in seine definierte Förderlage zurückkehrt.

Der V-förmige Aufnahmeabschnitt bzw. die V-förmige Aufnahme gewährleistet also auch, dass der Haltebügel bei Ausbleiben einer besonderen, äusseren Krafteinwirkung durch die Schwerkraft bedingt eine definierte Förderlage einnimmt. Die definierte Förderlage entspricht in Betriebsstellung insbesondere dem tiefsten Punkt des V-förmigen Aufnahmeabschnitts bzw. der V-förmigen Aufnahme.

Auf diese Weise lassen sich lokale Kraftspitzen, welche vom Haltebügel ausgehen, vermeiden bzw. reduzieren, die bei einer starren Halterung des Haltebügel direkt auf den Schwenkkörper einwirken würden.

Die begrenzte Querschnittsfläche der Bügelaufnahme setzt der Ausweichbewegung des Haltebügels allerdings auch Grenzen, so dass die Tasche nicht beliebig stark auslenken und dadurch den Förderbetrieb beeinträchtigen kann.

Die Hängefördereinrichtung mit der Verbindungsstruktur gemäss dem zweiten Erfindungsaspekt ist insbesondere in einer Vorrichtung gemäss dem ersten Erfindungsaspekt einsetzbar.

Die erfindungsgemässe Aufhängung der Transporttasche am Förderorgan weist den Vorteil auf, dass die Transporttasche über den Schwenkkörper quer zur Förderrichtung in einen definierten Schwenkwinkel frei schwingen kann. Dadurch können auf das Förderorgan wirkende Kippkräfte vermieden bzw. reduziert werden. Diese Kräfte führen nämlich zu erhöhtem Verschleiss am Förderorgan, insbesondere an Laufrädern oder Gleitelementen des Förderorgans und gegebenenfalls auch an der Führungsschiene.

Allerdings ist der Schwenkwinkel der Transporttasche erfindungsgemäss limitiert, so dass die Transporttasche nicht beliebig weit seitlich Ausschwenken und gegebenenfalls mit Anlageteilen oder anderen Transporttaschen kollidieren kann. Dies ist insbesondere in Speicherräumen der Hängefördereinrichtung zur (Zwischen-) Speicherung der leeren oder befüllten Transporttaschen von Bedeutung, in welchen die Platzverhältnisse in der Regel beengend sind und ein seitliches Schwenken der Transporttaschen nur begrenzt möglich ist.

Das Förderorgan der Hängefördereinrichtung gemäss den beiden oben beschriebenen Erfindungsaspekten ist insbesondere ein Laufwagen mit Laufrollen, über welche der Laufwagen entlang mindestens einer als Laufschiene ausgebildeten Führungsschiene rollend geführt ist.

Die Laufwagen können als Aussen- oder Innenläufer ausgebildet sein.

Die Laufwagen sind insbesondere als Einzelwagen ausgebildet. Einzelwagen bedeutet, dass die Laufwagen nicht direkt miteinander verbunden, z. B. verkettet, sind. Dies erlaubt eine individuelle Förderung der Transporttaschen.

Im Folgenden werden die beiden Erfindungsaspekte anhand von Ausführungsbeispielen, welche in den beiliegenden Figuren dargestellt sind, näher erläutert. Es zeigen jeweils schematisch:
- Figur 1:: eine perspektivische Ansicht einer erfindungsgemässen Vorrichtung im Transferbereich gemäss dem ersten Erfindungsaspekt;
- Figur 2a:: eine perspektivische Ansicht einer geöffneten Transporttasche,
- Figur 2b:: eine Seitenansicht der geschlossenen Transporttasche gemäss Figur 2a;
- Figur 3:: eine perspektivische Ansicht einer ersten Ausführungsvariante einer erfindungsgemässen Verbindungsstruktur mit Laufwagen gemäss dem zweiten Erfindungsaspekt;
- Figur 4:: eine perspektivische Ansicht einer zweiten Ausführungsvariante einer erfindungsgemässen Verbindungsstruktur mit Laufwagen gemäss dem zweiten Erfindungsaspekt;
- Figur 5a:: eine Explosionsansicht der Verbindungsstruktur gemäss der ersten Ausführungsvariante nach Figur 3;
- Figur 5b:: eine perspektivische Ansicht der Verbindungsstruktur gemäss der ersten Ausführungsvariante nach Figur 3;
- Figur 6a:: eine Explosionsansicht der Verbindungsstruktur gemäss der zweiten Ausfiihrungsvariante nach Figur 4;
- Figur 6b:: eine perspektivische Ansicht der zweiten Ausführungsvariante der erfindungsgemässen Verbindungsstruktur mit Laufwagen nach Figur 4;
- Figur 7a:: eine Ansicht der Verbindungsstruktur nach Figur 3 oder 4 in Förderrichtung mit einem in Förderrichtung relativ zum Verbindungskörper nach links geschwenktem Schwenkkörper;
- Figur 7b:: eine Ansicht der Verbindungsstruktur nach Figur 3 oder 4 in Förderrichtung mit einem in Förderrichtung relativ zum Verbindungskörper nach rechts geschwenktem Schwenkkörper;
- Figur: 8:: eine Seitenansicht der zweiten Ausführungsvariante gemäss Figur 4;
- Figur: 9:: eine Seitenansicht einer dritten Ausführungsvariante einer erfindungsgemässen Verbindungsstruktur mit Laufwagen gemäss dem zweiten Erfindungsaspekt.

Grundsätzlich sind in den Figuren gleiche Teile mit gleichen Bezugszeichen versehen. Für das Verständnis der Erfindung sind gewisse Merkmale in den Figuren nicht dargestellt.

Die beschriebenen Ausführungsbeispiele stehen beispielhaft für den Erfindungsgegenstand und haben keine beschränkende Wirkung. So sind insbesondere die in den vorliegenden Figuren gezeigten Transporttaschen lediglich beispielhaft. Andere Ausführungen von Transporttaschen sind ebenfalls denkbar.

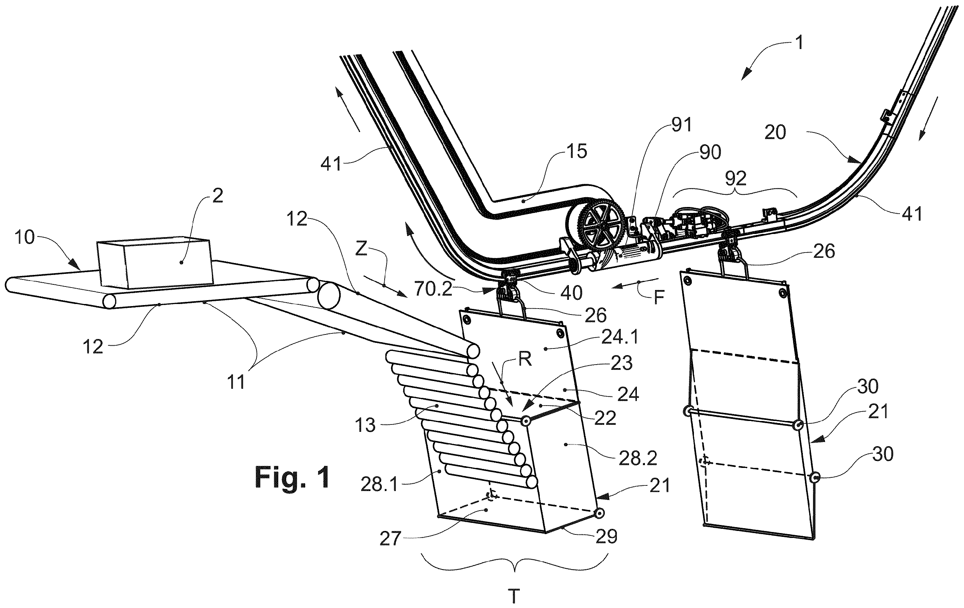

Die erfindungsgemässe Vorrichtung 1 gemäss Figur 1 umfasst eine Hängefördereinrichtung 20 sowie eine Zufördereinrichtung 10, welche zusammen einen Transferbereich T ausbilden.

Die Hängefördereinrichtung 20 umfasst eine Mehrzahl von Transporttaschen 21, welche jeweils einen Haltebügel 26 aufweisen. Die Transporttaschen 21 sind jeweils mittels des Haltebügels 26 über eine Verbindungsstruktur 70.2 gemäss der zweiten Ausführungsvariante mit einem Laufwagen 40 verbunden. Selbstverständlich ist auch eine Verbindungsstruktur 70.1 gemäss der ersten Ausführungsvariante möglich.

Der Laufwagen 40 umfasst Laufrollen 45, über welche dieser zwecks Förderns der Transporttasche 21 entlang einer Führungsschiene 41 der Hängefördereinrichtung 20 abrollt.

Die Hängefördereinrichtung 20 weist in Förderrichtung F vor dem Transferbereich T einen Vereinzelungsmechanismus 90 mit einer Förderschnecke 91 auf. An die Förderschnecke 91 schliesst ein Mitnahme- bzw. Aufwärtsförderer 15 an. Die Transporttaschen 21 werden durch den Mitnahmeförderer 15 einzeln in den Transferbereich T bewegt.

Der Mitnahmeförderer 15 ist als Nockenrundlauf ausgebildet, welcher getaktet betrieben wird. Der Nockenrundlauf zeichnet sich durch eine Nockenkette aus, an welcher eine Mehrzahl von Mitnehmernocken hintereinander und voneinander beabstandet angeordnet sind.

Vor dem Vereinzelungsmechanismus 90 wird eine Staustrecke 92 ausgebildet, in welcher die zum Vereinzelungsmechanismus 90 hin geförderten Transporttaschen 21 bis zu ihrer Förderung in den Transferbereich T zurückgehalten werden. Die Funktionsweise des Vereinzelungsmechanismus 90 und der Förderschnecke 91 wurde bereits im allgemeinen Beschreibungsteil erläutert.

Die Führungsschiene 41 und entsprechend der Förderweg der Transporttaschen 21 verläuft zum Transferbereich T hin horizontal. Die Führungsschiene 41 bildet im Transferbereich einen Biegungsabschnitt aus, in welchem die Transporttaschen 21 in einer Kurvenbahn von einer horizontalen Bewegungsrichtung in eine schräg nach oben gerichtete Bewegungsrichtung umgelenkt werden.

Die Zufördereinrichtung 10 umfasst mehrere, in Zuförderrichtung Z hintereinander angeordnete Fördereinheiten 11 mit jeweils einem Förderband 12. Die Fördereinheiten 11 bilden eine Förderfläche für das in den Transferbereich T zu fördernden Transportgut 2 aus.

Die Zufördereinrichtung 10 enthält im Transferbereich T eine abschliessende Fördereinheit 13 in Form einer Rollenbahn, über welche das Transportgut 2 abrollen und von oben in die Transporttasche 21 gleiten bzw. rutschen kann.

Die Transporttasche 21 enthält eine in Förderrichtung F nachlaufende Taschenrückwand 24 und eine vorlaufende Taschenvorderwand 27, welche über Taschenseitenwände 28.1, 28.2 sowie über einen Taschenboden 29 miteinander verbunden sind.

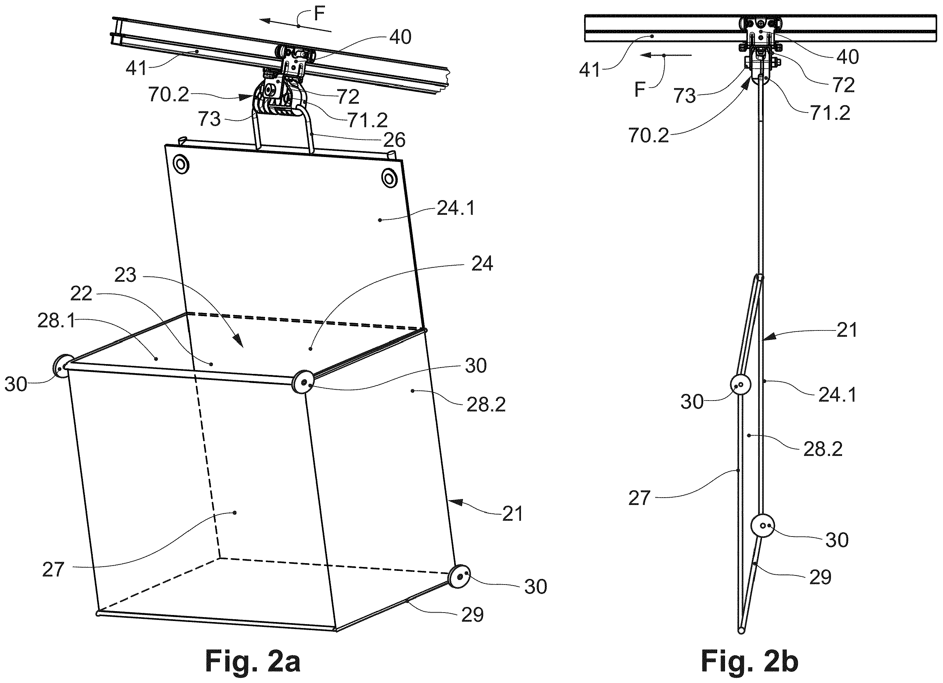

Die Taschenrückband 24 und die Taschenvorderwand 27 bilden zusammen mit den Taschenseitenwänden 28.1, 28.2 und dem Taschenboden 29 in der Offenstellung ein nach oben offenes Aufnahmefach 23 mit einer entsprechenden Aufnahmeöffnung 22 auf (siehe auch Figuren 2a und 2b).

Die Transporttasche 21 bildet ferner zum Laufwagen 40 hin einen verlängerten Rückwandabschnitt 24.1 aus, an welchem der Haltebügel 26 angeordnet ist.

Sowohl die Taschenrückwand 24 als auch die Taschenvorderwand 27 sind eigenstabil, d.h. selbsttragend ausgebildet.

Die Transporttasche 21 weist einen Rahmen aus Draht auf, welcher zur Ausbildung der Wände 24, 27, 28.1, 28.2 mit einem Gewebe bespannt ist.

Die Transporttasche 21 gemäss vorliegender Ausführungsform ist von einer Schliessstellung (Figur 2b), in welcher die Taschenvorderwand 27 zur Taschenrückwand 24 hin zurückversetzt ist, in eine Offenstellung (Figur 2a), in welcher das Aufnahmefach 23 ausgebildet wird, aufklappbar und umgekehrt.

Die Transporttasche 21 enthält im Weiteren Steuerrollen 30, welche im Zusammenwirken mit einem Öffnungsmechanismus, wie Steuerkulisse, (nicht gezeigt) dem Öffnen der Transporttasche 21 dienen.

Die Transporttasche 21 ist über den Haltebügel 26 mit einem Laufwagen 40 verbunden. Hierzu ist der Haltebügel 26 mit einem Bügelabschnitt an einer Verbindungsstruktur 70.2 befestigt, welche wiederum mit dem Laufwagen 40 verbunden ist.

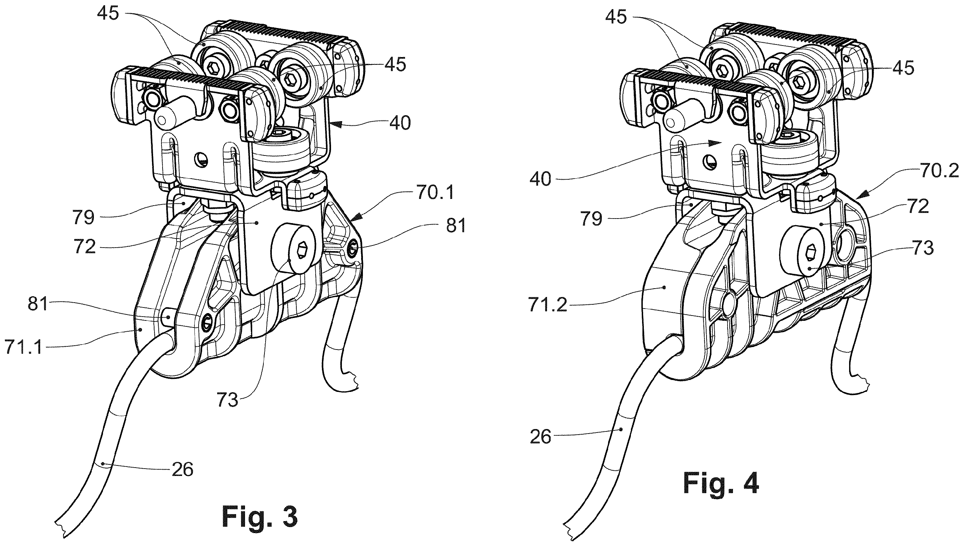

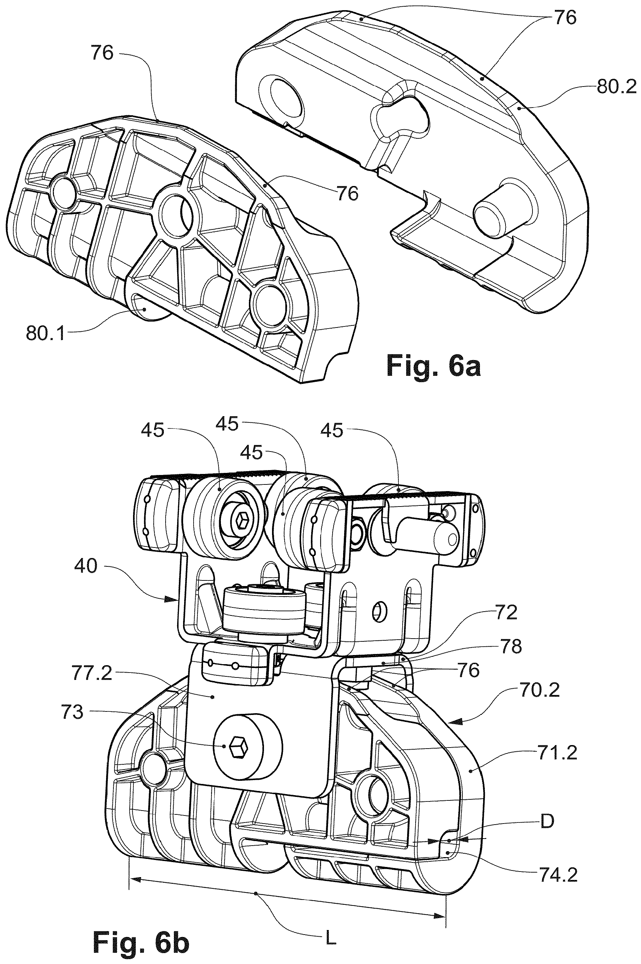

Die Verbindungsstruktur 70.2 bzw. 70.1 wird im Zusammenhang mit den Figuren 3 bis 7 im Rahmen des zweiten Erfindungsaspekts noch näher beschrieben.

In Ausübung des erfindungsgemässen Verfahrens wird jeweils eine einzelne Transporttasche 21 entlang einer zuführenden Förderstrecke in Förderrichtung F mit dem in Förderrichtung F vorlaufenden Aufnahmefach 23 in den Transferbereich T bewegt.

Die Transporttasche 21 wird vor oder im Transferbereich T mittels eines Öffnungsmechanismus (nicht gezeigt) aktiv geöffnet.

Die Transporttasche 21 liegt im Transferbereich T mit ihrer Taschenvorderwand 27 der abschliessenden Fördereinheit 13 der Zufördereinrichtung 10 an, welche folglich eine Taschenauflage ausbildet.

Sobald die Transporttasche 21 den Transferbereich T erreicht hat, wird die Förderung der Transporttasche 21 zwecks Transfer eines Transportgutes 2 angehalten. Die Transporttasche befindet sich folglich beim Transfer des Transportgutes 2 in die Transporttasche 21 nicht in einer Förderbewegung.

Über die Zufördereinrichtung 10 wird ein der Förderfläche der Fördereinheiten 11, 13 aufliegendes Transportgut 2 dem Transferbereich T zugefördert. Das Transportgut 2 gleitet über die Rollenbahn der abschliessenden Fördereinheit 13 in einer Transferrichtung R durch die Aufnahmeöffnung 22 in das Aufnahmefach 23 hinein.

Nach dem Transfer des Transportgutes 2 in die Transporttasche 21 wird die Transporttasche 21 mit dem Transportgut 2 mittels des Mitnahmeförderers 15 entlang des Biegungsabschnittes der Förderschiene entlang einer Kurvenbahn aus der horizontalen Förderung schräg nach oben aus dem Transferbereich T heraus bewegt. Die Transporttasche 21 rollt bei diesem Vorgang mit ihrer Taschenvorderwand 21 auf der Rollenbahn der abschliessenden Fördereinheit 13 ab.

Die abschliessende Fördereinheit 13 mit der Rollenbahn kann zur Freigabe des Förderweges für die mit dem Transportgut 2 beschickte Transporttasche 21 aus seiner Förderposition weggeschwenkt werden.

Sobald die mit dem Transportgut 2 beschickte Transporttasche 21 nach oben aus dem Transferbereich T weggefördert ist, kann eine nachfolgende Transporttasche 21 in den Transferbereich T gefördert werden.

Dies ist dann der Fall, wenn die mit dem Transportgut 2 beschickte Transporttasche 21 mindestens um eine Taschenlänge aus dem Transferbereich T herausbewegt ist.

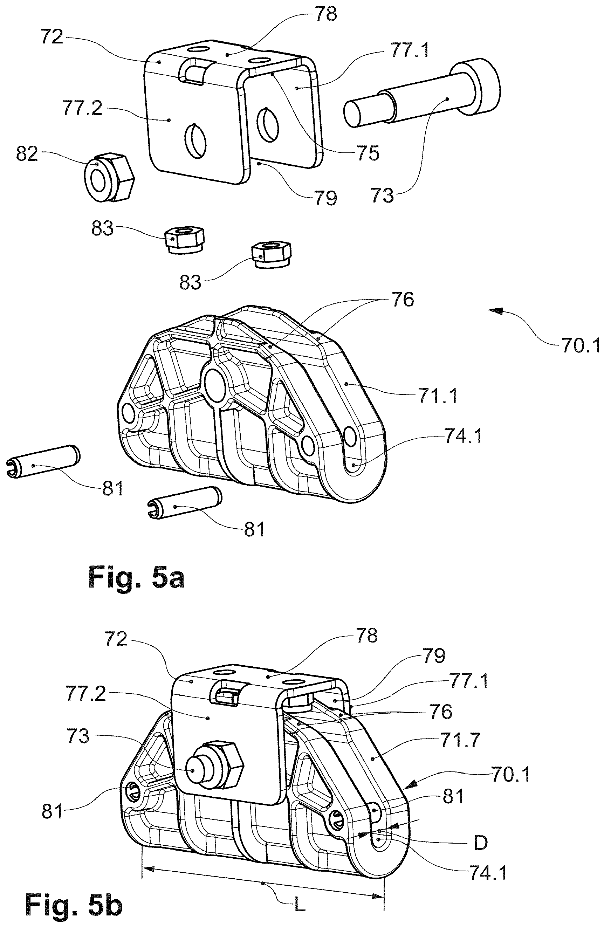

Die Figuren 3 sowie die Figuren 5a und 5b zeigen jeweils eine erste Ausführungsvariante einer Verbindungsstruktur 70.1 gemäss dem zweiten Erfindungsaspekt.

Die Figuren 4, 6a, 6b und 8 zeigen jeweils eine zweite Ausführungsvariante einer Verbindungsstruktur 70.2 gemäss dem zweiten Erfindungsaspekt.

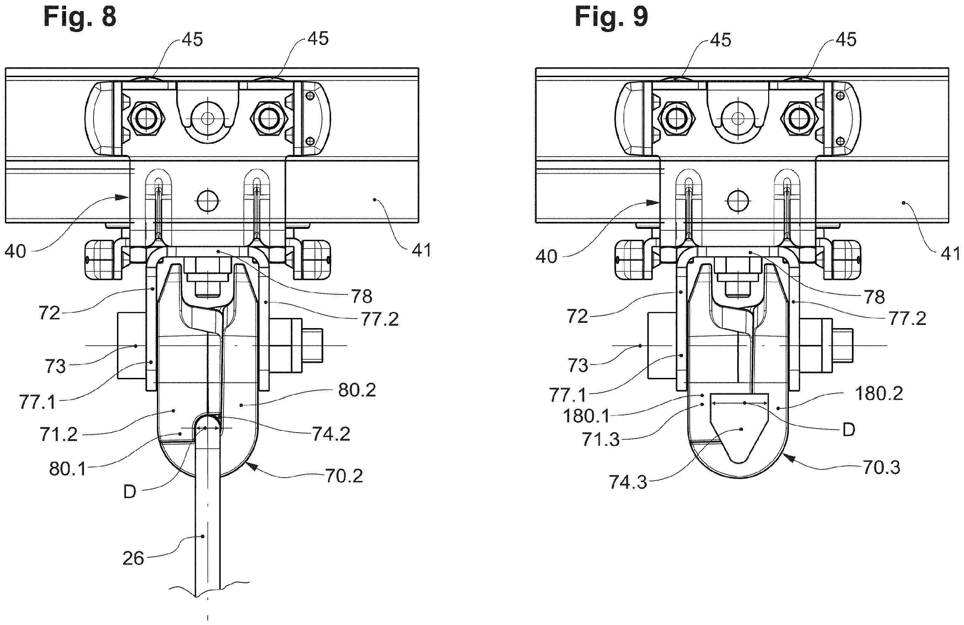

Die Figur 9 zeigt eine dritte Ausführungsvariante einer Verbindungsstruktur 170 gemäss dem zweiten Erfindungsaspekt. Die dritte Ausführungsvariante entspricht grundsätzlich der zweiten Ausführungsvariante und unterscheidet sich von dieser lediglich in der Ausgestaltung der Bügelaufnahme 74.3 für den Haltebügel 26. Entsprechend enthält die dritte Ausführungsvariante mit Ausnahme der Ausgestaltung der Bügelaufnahme sämtliche Merkmale der zweiten Ausführungsvariante, auch wenn diese in der einzigen Figur 9 nicht alle dargestellt sind.

Gemäss den drei Ausführungsvarianten umfasst die Verbindungsstruktur 70.1, 70.2, 70.3 einen Schwenkkörper 71.1, 71.2, 71.3, welcher über eine Schwenkachse 73 mit einem Verbindungskörper 72 verbunden ist.

Der Schwenkkörper 71.1, 71.2, 71.3 ist ein Spritzgussteil aus Kunststoff oder Metall, welches zur Erhöhung der Festigkeit Verstärkungsrippen aufweist.

Der Schwenkkörper 71.1, 71.2, 71.3 weist in einem zum Verbindungskörper 72 gerichteten Schwenkkörperabschnitt so genannte Schwenkbegrenzungsflächen 76 auf, welche bei Erreichen einer maximal zulässigen Auslenkung an einem Schwenkanschlag 75 am Verbindungskörper 72 anschlagen.

Der Verbindungskörper 72 ist U-förmig ausgebildet und umfasst zwei seitliche Führungswände 77.1, 77.2, welche über eine Verbindungswand 78 miteinander verbunden sind und einen Schwenkraum 79 ausbilden.

Ein Schwenkkörperabschnitt des Schwenkkörpers 71.1, 71.2, 71.3 ist im Schwenkraum 79 des Verbindungskörpers 72 angeordnet und wird von den beiden Führungswänden 77.1, 77.2 flankiert.

Die Führungswände 77.1, 77.2 bilden eine Führung für den Schwenkkörper 71.1, 71.2, 71.3 aus. Die Verbindungswand 78 bildet den Schwenkanschlag 75 für die Schwenkbegrenzungsflächen 76 aus.

Eine parallel zur Förderrichtung F orientierte Schwenkachse 73 ist durch die beiden Führungswände 77.1, 77.2 und den zwischen diesen angeordneten Schwenkkörperabschnitt geführt. Die Schwenkachse 73 verbindet den Schwenkkörper 71.1, 71.2, 71.3 mit dem Verbindungskörper 72. Überdies bildet die Schwenkachse 73 eine Schwenklagerung für den Schwenkkörper 71.1, 71.2, 71.3 am Verbindungskörper 72 aus.

Die Schwenkachse 73 weist ein Schraubengewinde auf, welches die Befestigung der Schwenkachse 73 am Verbindungskörper 72 mittels einer Schraubenmutter 82 ermöglicht.

Der Verbindungskörper 72 ist über die Verbindungswand 78 mit einem Laufwagen 40 verbunden. Die Verbindung ist eine lösbare Schraubverbindung mit Schraubenmuttern 83.

Der Schwenkkörper 71.1, 71.2, 71.3 bildet eine Bügelaufnahme 74.1, 74.2, 74.3 zur Aufnahme eines Haltebügels 26 bzw. eines Haltebügelabschnittes aus. Die Länge L der Bügelaufnahme 74.1, 74.2, 74.3, welche sich in Betriebsstellung quer zur Förderrichtung F erstreckt, beträgt ein Mehrfaches des grössten, parallel zur Förderrichtung gemessenen Durchmessers D der Bügelaufnahme 74.1, 74.2, 74.3.

Gemäss der ersten Ausführungsvariante nach Figur 3 sowie Figur 5a und 5b ist der Schwenkkörper 71.1 einteilig ausgebildet und weist eine zum Verbindungskörper 72 hin offene, quer zur Förderrichtung F verlaufenden, schlitzförmige Bügelaufnahme 74.1 für den Haltebügel 26 auf.

Zur Befestigung des Haltebügels 26 am Schwenkkörper 72 wird ein Haltebügelabschnitt vor der Montage des Schwenkkörpers 71.1 am Verbindungskörper 72 in die einseitig offene schlitzförmige Bügelaufnahme 74.1 eingeführt.

Der Haltebügel 26 und mit diesem die Transporttasche 21 ist in der Bügelaufnahme 74.1 des Schwenkkörpers 71.1 in und entgegen der Förderrichtung F relativ zum Schwenkkörper 71.1 schwenkbar gelagert.

Die Bügelaufnahme 74.1 weist einen muldenförmigen Aufnahmeboden aus, welcher gegengleich zum Auflagequerschnitt des insbesondere kreisquerschnittförmigen Haltebügels 26 ausgebildet ist. Diese Geometrie garantiert eine flächige Auflage des Haltebügels 26 in der Bügelaufnahme 74.1.

Der Haltebügel 26 ist ferner quer zur Förderrichtung F starr bzw. unbeweglich gelagert, so dass ein Schwenken in der Bügelaufnahme 74.1 quer zur Förderrichtung F nicht möglich ist.

Für die starre Lagerung des Haltebügels 26 quer zur Förderrichtung F sorgen unter anderem auch Spannstifte 81, welche in den Schwenkkörper 71.1 eingelassen und quer durch die schlitzförmige Bügelaufnahme 74.1 geführt sind. Die Spannstifte 81 bestehen aus Federstahl und sind in Durchgangsöffnungen am Schwenkkörper 71.1 verklemmt.

Die Spannstifte 81 verhindern eine Verschiebung des Haltebügels 26 in Richtung des Verbindungskörpers 72.

Gemäss der zweiten und dritten Ausführungsvariante nach Figur 4, 6a, 6b, 8 und 9 ist der Schwenkkörper 71.2, 71.3 zweiteilig ausgebildet und umfasst ein erstes, schalenförmiges Fügeelement 80.1, 180.1 sowie ein zweites, schalenförmiges Fügeelement 80.2, 180.2.

Die Fügeelemente 80.1, 80.2; 180.1, 180.2 sind bezüglich ihrer Geometrie baugleich ausgebildet und so ausgelegt, dass sich diese unter Ausbildung einer quer zur Förderrichtung F verlaufende Bügelaufnahme 74.2, 74.3 für den Haltebügel 26 zu einem Schwenkkörper 71.2, 71.3 fügen lassen.

Zur Befestigung des Haltebügels 26 am Schwenkkörper 72 wird ein Haltebügelabschnitt vor der Montage des Schwenkkörpers 71.2, 71.3, d.h. vor dem Zusammenfügen der Fügelemente 80.1, 80.2; 180.1, 180.2, im Bereich der auszubildenden Bügelaufnahme 74.2, 74.3 zwischen die beiden Fügeelemente 80.1, 80.2; 180.1, 180.2 eingelegt.

Der Haltebügel 26 und mit diesem die Transporttasche 21 ist in der Bügelaufnahme 74.2, 74.3 des Schwenkkörpers 71.2, 71.3 in und entgegen der Förderrichtung F schwenkbar gelagert.

Gemäss der zweiten Ausführungsvariante gemäss den Figuren 4, 6a, 6b und 8 ist der der Haltebügel 26 quer zur Förderrichtung F starr bzw. unbeweglich gelagert, so dass ein Schwenken in der Bügelaufnahme 74.2 quer zur Förderrichtung F nicht möglich ist.

Dies wird unter anderem dadurch erreicht, indem der Haltebügel 26 in der Bügelaufnahme 74.2 jeweils an den seitlichen Endabschnitten des Schwenkkörpers 71.2 vom Schwenkkörper vollumfänglich, insbesondere im Wesentlichen formschlüssig eingefasst ist. Hierbei wird der Haltebügel in der Bügelaufnahme 74.2 lediglich mit geringfügigem Spiel gehaltert, welche eine unbehinderte Schwenkbewegung der Tasche in und entgegen der Förderrichtung erlaubt.

Die Fügeelemente 80.1, 80.2 gemäss der zweiten Ausführungsvariante weisen im Weiteren Verbindungsöffnungen und gegengleich angeordnete Verbindungszapfen auf, welche beim Zusammenfügen der Fügeelemente 80.1, 80.2 formschlüssig in die Verbindungsöffnungen greifen und so die beiden Fügeelemente 80.1, 80.2 miteinander zum Schwenkkörper 71.2 verbinden. Die Verbindungszapfen sorgen überdies ebenfalls für eine Einschränkung der Bewegung des Haltebügels 26 in Richtung Verbindungskörper 72.

Gemäss der dritten Ausführungsvariante gemäss Figur 9 weist der Schwenkkörper 71.3 in den seitlichen Endabschnitten jeweils eine Bügelaufnahme 74.3 auf, deren Querschnittsfläche ein Mehrfaches der Querschnittsfläche des aufzunehmenden Bügels beträgt. Die Bügelaufnahme 74.3 bildet einen V-förmigen Aufnahmeabschnitt aus, dessen geneigten Seitenflanken in Betriebsstellung nach unten, d.h. in Schwerkraftrichtung zusammenlaufen. Die Bügelaufnahme 74.3 bildet im Weiteren oberhalb des V-förmigen Aufnahmeabschnittes einen weiteren rechteckförmigen Aufnahmeabschnitt aus, welcher gemeinsam mit V-förmigen Aufnahmeabschnitt die Bügelaufnahme 74.3 ausbildet.

Der V-förmige Aufnahmeabschnitt bildet im Bereich der zusammentreffenden seitlichen Flanken eine definierte Förderlage für den Haltebügel aus.

Die Fügeelemente 180.1, 180.2 gemäss der dritten Ausführungsvariante können ebenfalls eine Anordnung von Verbindungsöffnungen und gegengleich angeordneten Verbindungszapfen zum Zusammenfügen der Fügeelemente 180.1, 180.2 in der oben beschriebenen Art aufweisen.

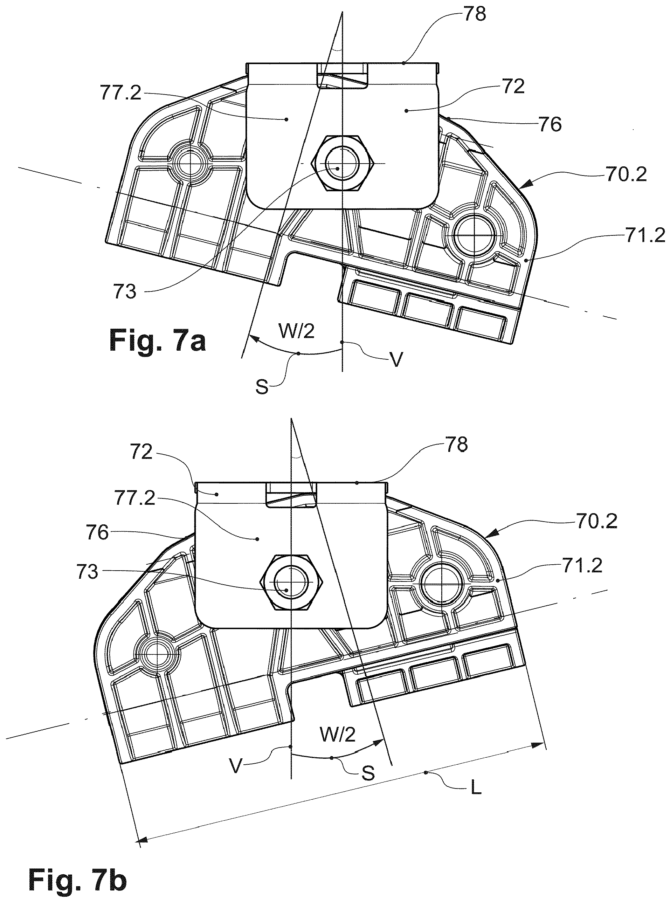

Die Figuren 7a und 7b zeigen die durch den Schwenkanschlag 75 des Verbindungskörper 72 und der Schwenkbegrenzungsflächen 76 des Schwenkkörpers 71.2 vorgegebene, maximale seitliche Auslenkung des Schwenkkörpers 71.2 gegenüber dem Verbindungskörper 72.

Der Schwenkkörper 71.2 ist jeweils um den halben maximalen Schwenkwinkel W/2 aus einer Vertikalen V in einer quer zur Förderrichtung F orientierten Schwenkrichtung S seitlich auslenkbar. In der maximalen seitlichen Auslenkung trifft der Schwenkkörper 71.2 mit einer Schwenkbegrenzungsfläche 76 auf den Schwenkanschlag 75 am Verbindungskörper 72.

Selbstverständlich trifft die Darstellung gemäss Figur 7a und 7b auch auf die erste Ausführungsvariante nach Figur 3 zu.

## Patentansprüche

1. Hängefördereinrichtung (20), enthaltend eine Führungsschiene (41) und mindestens eine Transporttasche (21) für den hängenden Transport eines Transportgutes (2) entlang eines Förderweges, wobei die mindestens eine Transporttasche (21) über eine Verbindungsstruktur (70.1, 70.2) mit einem entlang der Führungsschiene (41) bewegbaren Förderorgan (40) verbunden ist, **dadurch gekennzeichnet, dass**
die Verbindungsstruktur (70.1, 70.2) einen Schwenkkörper (71.1, 71.2) und einen Verbindungskörper (72) enthält, wobei die Transporttasche (21) am Schwenkkörper (71.1, 71.2) befestigt ist, und der Verbindungskörper (72) mit dem Förderorgan (40) verbunden ist, und wobei der Schwenkkörper (71.1, 71.2) über eine Schwenkverbindung mit dem Verbindungskörper (72) verbunden ist, derart dass der Schwenkkörper (71.1, 71.2) gegenüber dem Verbindungskörper (72) quer zur Förderrichtung (F) geführt schwenkbar ist.

2. Hängefördereinrichtung nach Anspruch 1, **dadurch gekennzeichnet, dass** der Verbindungskörper (72) mindestens einen Schwenkanschlag (75) zur Begrenzung des Schwenkwinkels (W) des Schwenkkörpers (71.1, 71.2) ausbildet.

3. Hängefördereinrichtung nach einem der Ansprüche 1 bis 2, **dadurch gekennzeichnet, dass** die Verbindungsstruktur (70.1, 70.2) ein Drehen der Transporttasche (21) um ihre Mittelängsachse verhindert.

4. Hängefördereinrichtung nach einem der Ansprüche 1 bis 3, **dadurch gekennzeichnet, dass** der Schwenkkörper (71.1, 71.2) über eine Schwenkachse (73) mit dem Verbindungskörper (72) verbunden ist, wobei die Schwenkachse (73) parallel zur Förderrichtung (F) angeordnet ist.

5. Hängefördereinrichtung nach einem der Ansprüche 1 bis 4, **dadurch gekennzeichnet, dass** der Schwenkkörper (71.1, 71.2) eine Bügelaufnahme (74.1, 74.2) für einen Haltebügel (26) der Transporttasche (21) ausbildet, und die Transporttasche (21) über den Haltebügel (26) in und entgegen der Förderrichtung (F) schwenkbar in der Bügelaufnahme (74.1, 74.2) gelagert ist.

6. Hängefördereinrichtung nach einem der Ansprüche 1 bis 5, **dadurch gekennzeichnet, dass** der Schwenkkörper (71.3) eine Bügelaufnahme (74.3) für einen Haltebügel (26) der Transporttasche (21) ausbildet, wobei die Bügelaufnahme (74.3) einen V-förmigen Aufnahmeabschnitt aufweist oder als V-förmige Aufnahme ausgebildet ist.

7. Hängefördereinrichtung nach Anspruch 6, **dadurch gekennzeichnet, dass** die geneigten Seitenflanken des V-förmigen Bügelabschnittes bzw. der V-förmigen Bügelaufnahme (74.3) in Betriebsstellung nach unten, d.h. in Schwerkraftrichtung, zusammenlaufen.

8. Hängefördereinrichtung nach einem der Ansprüche 1 bis 7, **dadurch gekennzeichnet, dass** das Förderorgan (40) ein Laufwagen mit Laufrollen (42) ist.

9. Vorrichtung (1) zum Beschicken einer hängenden Transporttasche (21) von oben mit einem Transportgut (2), insbesondere Stückgut, enthaltend eine Hängefördereinrichtung (20) nach einem der Ansprüche 1 bis 8 und eine Zufördereinrichtung (10) zum Zufördern des Transportguts (2) in einen Transferbereich (T) der Hängefördereinrichtung (20), wobei der Verlauf der Führungsschiene (41) so ausgelegt ist, dass die Transporttasche (21) hängend aus dem Transferbereich (T) nach oben weggefördert wird.

10. Vorrichtung nach einem der Ansprüche 1 bis 9, **dadurch gekennzeichnet, dass** die Zufördereinrichtung (10) eine Förderfläche ausbildet, welcher das Transportgut (2) aufliegt.

11. Vorrichtung nach einem der Ansprüche 1 bis 10, **dadurch gekennzeichnet, dass** die Transporttasche (21) ein in Förderrichtung (F) vorlaufendes Aufnahmefach (23) ausbildet und mit diesem im Transferbereich (T) frontal vor der Zufördereinrichtung (10) angeordnet ist.

12. Vorrichtung nach einem der Ansprüche 1 bis 11, **dadurch gekennzeichnet, dass** die Vorrichtung (1) eine Taschenauflage ausbildet, an welcher die Transporttasche (21) im Transferbereich (T) mit einer Taschenvorderwand (27) anliegt.

13. Verfahren zum Beschicken mindestens einer Transporttasche (21) mit einem Transportgut (2), insbesondere mittels einer Vorrichtung (1) gemäss einem der Ansprüche 1 bis 12, wobei die Transporttasche (21) in einer Förderrichtung (F) in einen Transferbereich (T) eintritt, und das Transportgut (2) mittels einer Zufördereinrichtung (10) dem Transferbereich (T) zugefördert und von oben in die Transporttasche (21) transferiert wird,
**dadurch gekennzeichnet, dass**
die Transporttasche (21) nach dem Transfer des Transportgutes (2) in die Transporttasche (21) hängend nach oben weggefördert wird.

14. Verfahren nach Anspruch 13, **dadurch gekennzeichnet, dass** die Transporttasche (21) unmittelbar nach dem Transferbereich (T) über einen Förderstreckenabschnitt im Wesentlichen entgegen einer Transferrichtung (E) des Transportgutes (2) aus dem Transferbereich (T) herausbewegt wird.

15. Verfahren nach einem der Ansprüche 13 bis 14, **dadurch gekennzeichnet, dass** das Transportgut (2) schwerkraftunterstützt in die Transporttasche (21) transferiert wird.
